# FASCICULE DE BREVET EUROPEEN

(11) **EP 1 366 622 B1**
(45) Date de publication et mention de la délivrance du brevet: **23.01.2008**
(21) Numéro de dépôt: 02700518.0
(22) Date de dépôt: 25.02.2002
(51) Int. Cl.: H04N 7/16

(54) **SYSTEME ET METHODE DE TRACAGE DE SIGNAL**
SIGNALVERFOLGUNGSSYSTEM- UND METHODE
SIGNAL TRACING SYSTEM AND METHOD

(30) Priorité: 26.02.2001 CH 3452001
(43) Date de publication de la demande: 03.12.2003
(73) Titulaire: Nagravision SA, 1033 Cheseaux-sur-Lausanne (CH)
(72) Inventeur: GOEKE, Maxime, CH-1277 Borex (CH)
(74) Mandataire: Wenger, Joel-Théophile
(86) Numéro de dépôt international: PCT/IB2002/000555
(87) Numéro de publication internationale: WO 2002/069635

(56) Documents cités:
- WO-A-98/44735
- US-A- 5 600 573
- US-A- 5 805 204

## Description

La présente invention est du domaine de la distribution d'un signal d'informations au travers de plusieurs intervenants, en particulier pour déterminer d'une manière indiscutable l'origine de ce signal.

Dans le cas d'une diffusion de télévision à péage, plusieurs intervenants coopèrent pour que les abonnés puissent recevoir les émissions souhaitées.

Parmi ces intervenants, nous trouvons premièrement les opérateurs principaux ou nationaux qui mettent à disposition les chaînes de télévision importantes. Il faut savoir qu'une même chaîne peut être proposée par plus d'un opérateurs national.

Ces derniers peuvent soit en être les créateurs de cette chaîne ou soit conclure des contrats de diffusion avec d'autres chaînes, locales ou étrangères.

Ces opérateurs nationaux proposent ainsi une palette de services aux opérateurs locaux, ces derniers étant connectés à un certain nombre d'abonnés.

Un opérateur local peut être actif dans plusieurs régions et les contrats liant cet opérateur avec un opérateur national sont généralement basés sur le nombre d'abonnés vers lesquels la chaîne sera diffusée.

Ainsi il est possible pour un opérateur local de conclure un contrat de diffusion pour une région A bien que cet opérateur diffuse dans les régions B et C également.

Il existe alors techniquement une possibilité pour cet opérateur de diffuser également dans les régions B et C sans que l'opérateur national puisse intervenir.

Ceci est notablement le cas du fait que la chaîne diffusée illégitimement dans le région B est également proposée par un autre opérateur national. Il est dès lors difficile pour l'opérateur principal, de savoir si le signal reçu dans la région B provient du contrat conclu uniquement pour la région A ou provient d'un autre opérateur national. En effet, chaque abonné peut être raccordé à plus d'un opérateur local, ces derniers s'approvisionnant auprès de nombreux opérateurs nationaux.

Il faut savoir que les opérateurs nationaux transmettent les signaux à destination des opérateurs locaux sous forme encryptées. Pour l'opération de décryption, des moyens de décryption sont fournis par l'opérateur national, ces moyens comprennent un module de décryptage et une carte à puce, cette dernière étant en charge d'assurer le contrôle d'accès. Une fois le signal décrypté par les moyens de décryption, l'opérateur local peut en disposer à sa guise. Il lui est dès lors loisible de composer son bouquet télévisuel avec une sélection de chaînes souscrites auprès de plusieurs opérateurs nationaux.

Le but de la présente invention est de proposer un système et une méthode pour déterminer l'origine du signal reçu par un abonné dans une région donnée.

Ce but est atteint par un système comprenant des moyens d'encryption situés chez un opérateur principal, des moyens de transmission d'un signal vidéo encrypté vers au moins un opérateur local et des moyens de décryption chez cet opérateur local, caractérisé en ce que les moyens de décryption comprennent des moyens d'identification remplaçant tout ou partie le signal vidéo décrypté par un signal d'identification caractérisant les moyens de décryption lesdits moyens de substitution étant commandé par l'opérateur principal.

Par signal d'identification, on entend une signature visuelle affichée sur une région quelconque de l'écran. Elle peut pendre la forme d'un champ textuel au bas de l'écran ou une trame de fond se superposant à l'image réelle.

Lorsque ce signal est ajouté au signal vidéo, tous les abonnés vers lesquels ce canal est diffusé, verront apparaître sur leur écran, un message d'identification.

Afin de pouvoir retracer l'origine des données transmises vers un abonné, ce message va contenir un identificateur propre aux moyens de décryption responsables de la décryption du signal de l'opérateur principal.

Ce dernier pourra ainsi faire la preuve que le canal disponible chez un abonné donné est le résultat de sa transmission vers un opérateur local donné.

Selon notre exemple précédent, un abonné de la région B sert de test pour déterminer si le contrat avec l'opérateur local est bien respecté. Si le message d'identification apparaît sur son écran, l'opérateur local n'a pas respecté son contrat qui était limité à la région A.

L'invention sera mieux comprise grâce à la description détaillée qui va suivre et qui se réfère au dessin annexé qui est donné à titre d'exemple nullement limitatif, dans lequel la figure unique représente un système de diffusion de télévision à péage à plusieurs intervenants.

Sur la gauche se trouve deux opérateurs principaux OPP1 et OPP2. Ces opérateurs proposent leurs canaux de diffusion à tous les opérateurs locaux représentés par OPL1 et OPL2.

La liaison entre les opérateurs principaux et locaux se fait par exemple par satellite ou par câble. De nombreux opérateurs locaux peuvent recevoir ces signaux et il est de ce fait nécessaire d'encrypter les données afin d'en contrôler l'accès.

A cet effet, un module de décryptage MS est placé chez l'opérateur local et est chargé de décrypter le signal encrypté par l'opérateur principal. Ce module à la forme d'un décodeur de télévision à péage et est relié à un module de sécurité qui à la forme d'une carte à puce. Cette carte contient les clés nécessaires au fonctionnement du cryptoprocesseur contenu dans le module de décryptage.

Ainsi, chaque opérateur principal qui conclu un accord avec un opérateur local, installe également un tel module de décryptage MS dans les locaux de l'opérateur local. Le signal sortant du module de décryptage MS est en clair et plus aucun contrôle ne peut se faire par l'opérateur principal.

L'opérateur local quant à lui compose son offre qui est un assemblage de plusieurs canaux acquis auprès de plusieurs opérateurs principaux (OPP1, OPP2) et l'encrypte selon un protocole et des moyens qui lui sont propres.

Ce nouveau signal est ensuite diffusé par différents moyens, par exemple par câble ou par faisceaux hertziens, à destination des régions cibles (RA, RB, RC) de cet opérateur.

Chez l'abonné se trouve le décodeur final (STB) en charge de décrypter le signal de l'opérateur local.

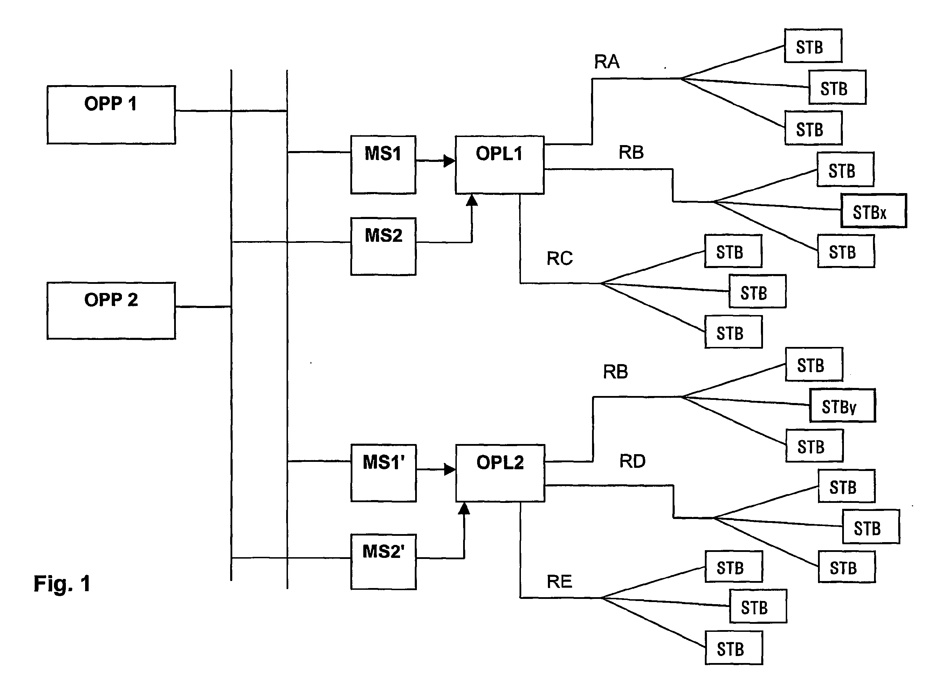

Selon notre exemple de la figure 1, la région B (RB) est desservie par deux opérateurs locaux soit les opérateurs OPL1 et OPL2.

L'opérateur principal OPP1 conclut un accord de diffusion du canal S avec l'opérateur OPL1 pour la région A (RA). Il est à noter que ce canal est également proposé par l'opérateur principal OPP2 qui conclut un accord avec un opérateur local OPL2 pour la région E (RE).

Dans le cas où ce canal S se retrouve également diffusé dans la région B, il est difficile pour l'opérateur principal OPP1, de savoir si un décodeur STB reçoit le canal S de la part de l'opérateur OPL1 ou de la part de OPL2, ce dernier étant également habilité à diffuser dans d'autres région le canal S. De plus, il se peut que les décodeurs STBy et STBx soient en fait un même décodeur, ce dernier disposant des droits d'abonnement auprès des deux opérateurs locaux.

Cette configuration est encore compliquée du fait que l'opérateur local OPL2 peut conclure un accord de diffusion pour la région B, soit avec l'opérateur OPP1 ou avec l'opérateur OPP2. Le simple fait d'ajouter un logo sur le signal diffusé par un opérateur principal ne permet pas de déterminer si les accords pour chaque région sont respectés.

C'est pourquoi, selon l'invention, l'opérateur principal OPL1 envoie une commande au module de décryptage MS1 pour qu'un signal identifiant ce module s'affiche sur l'écran des décodeurs recevant le signal issu de ce module de décryptage MS1.

Cette identification comprend généralement le numéro du module de décryptage et le numéro du module de sécurité (carte à puce). Ainsi, ces numéros prouvent sans conteste l'origine du canal S auprès d'un décodeur pour une région donnée. Cette indication dure quelques secondes pour ne pas déranger l'abonné.

Cette durée peut être gérée soit par le module de décryptage lui-même ou par une commande envoyée par l'opérateur principal pour désactiver cette fonction.

Selon une première forme de réalisation, ce signal remplace la partie basse de l'image par ces indications de type alphanumérique.

La région modifiée par ces informations peut être choisie aléatoirement pour empêcher l'opérateur local de détecter le mode d'identification et de remplacer la partie correspondante par un texte publicitaire.

Selon une deuxième forme de réalisation, les données d'identification sont ajoutées en toile de fond sur l'image. Il est dès lors impossible pour l'opérateur local de masquer cette information.

Selon une forme de réalisation de l'invention, la commande envoyée par un opérateur principal est dite globale c'est-à-dire qu'elle fait réagir tous les modules de décryptage (MS1, MS1').

Selon une autre forme de l'invention, la commande envoyée par un opérateur principal est dite sélective c'est-à-dire qu'elle fait réagir uniquement le module de décryptage appelé.

## Revendications

1. Système d'identification de l'origine d'un signal diffusé chez un abonné, comprenant des moyens d'encryption situés chez un opérateur principal, des moyens de transmission d'un signal vidéo encrypté vers au moins un opérateur local et des moyens de décryption chez cet opérateur local, cet opérateur local disposant dès lors du signal en clair pour diffusion vers ses abonnés, **caractérisé en ce que** les moyens de décryption comprennent des moyens de substitution remplaçant tout ou partie du signal vidéo décrypté par un signal d'identification caractérisant les moyens de décryption, lesdits moyens de substitution étant commandé par l'opérateur principal.

2. Système d'identification de l'origine d'un signal selon la revendication 1, **caractérisé en ce que** les moyens de décryption comprennent un module de décryptage et un module de sécurité

3. Système d'identification de l'origine d'un signal selon la revendication 2, **caractérisé en ce que** le signal d'identification comprend un identificateur du module de décryptage et un identificateur du module de sécurité.

4. Système d'identification de l'origine d'un signal selon les revendications 1 à 3, **caractérisé en ce que** le signal d'identification est placé dans une zone définie aléatoirement sur l'écran.

5. Système d'identification de l'origine d'un signal selon les revendications 1 à 3, **caractérisé en ce que** le signal d'identification est superposé à l'image courante comme toile de fond.

6. Méthode d'identification de l'origine d'une signal diffusé chez un abonné, cette méthode comprenant les étages suivantes:
- encryption par un opérateur principal d'un signal vidéo,
- transmission de ce signal encrypté à destination de plusieurs opérateurs locaux,
- décryption du signal encrypté par un module de décryptage (MS1, MS2) d'un opérateur local habilité (OPL1, OPL2) et disposition du signal en clair,
- diffusion de ce signal à destination des abonnés dudit opérateur local (OPL1, OPL2),
**caractérisée en ce qu'**elle consiste à:
- substituer par le module de décryptage, tout ou partie du signal en clair par un signal d'identification, identifiant ledit module de décryptage, la commande de substitution étant ordonnée par l'opérateur principal.

7. Méthode selon la revendication 6, **caractérisée en ce que** le signal d'identification remplace une partie de l'image formée par le signal en clair dans une région quelconque de l'image.

8. Méthode selon la revendication 6, **caractérisée en ce que** le signal d'identification est superposé à l'image courante comme toile de fond.

9. Méthode selon les revendications 6 à 8, **caractérisée en ce que** qu'elle consiste à envoyer une commande d'identification par l'opérateur principal, à destination du ou des modules de décryptage.

## Claims

1. System for identifying the origin of a signal broadcasted to a subscriber, comprising encryption means located at a main operator, transmission means of an encrypted video signal towards at least one local operator, and decryption means located at this local operator, this local operator having from then on the decrypted signal for broadcasting to its subscribers, **characterized in that** the decryption means comprise substitution means replacing all or part of the decrypted video signal with an identification signal characterizing the decryption means, said substitution means being controlled by the main operator.

2. System for identifying the origin of a signal according to Claim 1, **characterized in that** the decryption means comprise a decryption module and a security module.

3. System for identifying the origin of a signal according to Claim 2, **characterized in that** the identification signal comprises an identifier of the decryption module and an identifier of the security module.

4. System for identifying the origin of a signal according to Claims 1 to 3, **characterized in that** the identification signal is placed in a randomly defined area on the screen.

5. System for identifying the origin of a signal according to Claims 1 to 3, **characterized in that** the identification signal is overlaying the current image such as a background.

6. Method for identifying the origin of a signal broadcasted to a subscriber, this method comprising the following steps:
- encryption of a video signal by a main operator,
- transmission of this encrypted signal to several local operators,
- decryption of the encrypted signal by a decryption module (MS1, MS2) of an enabled local operator (OPL1, OPL2) and enabling use of the decrypted signal,
- broadcasting of this signal to the subscribers of said local operator (OPL1, OPL2),
**characterized in that** it consists in:
- substituting by the decryption module all or part of the decrypted signal with an identification signal identifying said decryption module, the substitution command being triggered by the main operator.

7. Method according to Claim 6, **characterized in that** the identification signal replaces a part of the image formed by the decrypted signal in any region of the image.

8. Method according to Claim 6, **characterized in that** the identification signal is overlaying the current image such as a background.

9. A method according to Claims 6 to 8, **characterized in that** it consists in sending an identification command by the main operator to one or several decryption modules.

## Patentansprüche

1. System für die Identifizierung des Ursprungs eines Sendesignals bei einem Teilnehmer mit Mitteln für eine Verschlüsselung bei einem Hauptbetreiber, Mitteln für die Übermittlung eines verschlüsselten Videosignals zu zumindest einem lokalen Betreiber und Mitteln für eine Entschlüsselung bei diesem lokalen Betreiber, wobei dieser lokale Betreiber dann zur Sendung an seine Teilnehmer über ein unverschlüsseltes Signal verfügt, **dadurch gekennzeichnet, dass** die Mittel für die Entschlüsselung Mittel für eine Substitution umfassen, die das gesamte oder einen Teil des entschlüsselten Videosignals durch ein Identifizierungssignal ersetzen, das die Entschlüsselungsmittel kennzeichnet, wobei die Substitutionsmittel durch den Hauptbetreiber kontrolliert werden.

2. System für die Identifizierung des Ursprungs eines Signals nach Anspruch 1, **dadurch gekennzeichnet, dass** die Entschlüsselungsmittel einen Entschlüsselungsmodul und einen Sicherheitsmodul umfassen.

3. System für die Identifizierung des Ursprungs eines Signals nach Anspruch 2, **dadurch gekennzeichnet, dass** das Identifizierungssignal eine Kennung des Entschlüsselungsmoduls und eine Kennung des Sicherheitsmoduls umfasst.

4. System für die Identifizierung des Ursprungs eines Signals nach Ansprüchen 1 bis 3, **dadurch gekennzeichnet, dass** das Identifizierungssignal in einen zufallsbedingt definierten Bereich des Bildschirms platziert wird.

5. System für die Identifizierung des Ursprungs eines Signals nach Ansprüchen 1 bis 3, **dadurch gekennzeichnet, dass** das Identifizierungssignal dem laufenden Bild als ein Hintergrundmuster überlagert wird.

6. Verfahren zur Identifizierung des Ursprungs eines Sendesignals bei einem Teilnehmer, die folgenden Schritte umfassend:
- Verschlüsselung eines Videosignals durch einen Hauptbetreiber,
- Übermittlung dieses verschlüsselten Signals zu mehreren lokalen Betreibern,
- Entschlüsselung des verschlüsselten Signals durch einen Entschlüsselungsmodul (MS1, MS2) eines berechtigten lokalen Betreibers (OPL1, OPL2) und Verfügung über das unverschlüsselte Signal,
- Senden dieses Signals an Teilnehmer des lokalen Betreibers (OPL1, OPL2),
**dadurch gekennzeichnet, dass** es darin besteht,
- durch den Entschlüsselungsmodul das gesamte oder einen Teil des unverschlüsselten Signals durch ein Identifizierungssignal zu ersetzen, das den Entschlüsselungsmodul identifiziert, wobei der Befehl für die Substitution durch den Hauptbetreiber gegeben wird.

7. Verfahren nach Anspruch 6, **dadurch gekennzeichnet, dass** das Identifizierungssignal einen Teil des durch das unverschlüsselte Signal erzeugten Bildes in einem beliebigen Bereich des Bildes ersetzt.

8. Verfahren nach Anspruch 6, **dadurch gekennzeichnet, dass** das Identifizierungssignal dem laufenden Bild als Hintergrundmuster überlagert wird.

9. Verfahren nach Ansprüchen 6 bis 8, **dadurch gekennzeichnet, dass** es darin besteht, an den oder die Entschlüsselungsmoduln seitens des Hauptbetreibers einen Identifizierungsbefehl zu verschicken.
